# NEUE EUROPÄISCHE PATENTSCHRIFT

(11) **EP 0 092 685 B2**
(45) Veröffentlichungstag und Bekanntmachung des Hinweises auf die Entscheidung über den Einspruch: **02.08.1995**
(45) Hinweis auf die Patenterteilung: 13.07.1988
(21) Anmeldenummer: 83103097.8
(22) Anmeldetag: 29.03.1983
(51) Int. Cl.: B29C 33/30

(54) **Schnellwechsel- und/oder Spannvorrichtung für die Formwerkzeuge von Spritzgiessmaschinen**
Quick-change and/or clamping device for forming dies of injection moulding machines
Dispositif de changement rapide et/ou serrage de moules pour machines à injection

(30) Priorität: 26.04.1982 DE 8212045 U; 03.06.1982 DE 3220911
(43) Veröffentlichungstag der Anmeldung: 02.11.1983
(73) Patentinhaber: Battenfeld GmbH, D-58540 Meinerzhagen (DE)
(72) Erfinder: Cyriax, Wilhelm, D-5882 Meinerzhagen 1 (DE); Langecker, Günter, Dr., D-5882 Meinerzhagen 1 (DE); Hardenacke, Karl-Albert, D-5962 Drolshagen-Frenkhausen (DE)
(74) Vertreter: Müller, Gerd, Dipl.-Ing.

(56) Entgegenhaltungen:
- DE-A- 2 332 205
- DE-A- 2 457 288
- DE-B- 2 617 255
- DE-C- 2 421 811
- FR-A- 2 469 998
- JP-A- 5 567 428
- JP-U- 5 694 313
- US-A- 4 202 522
- European Plastics News, 3/82, "Mould changing in minutes"
- Battenfeld-Symposium mit Sonderschau, 4.5.82-7.5.82, G. Langecker, "Das Battenfeld-Werkzeugschnellwechselsystem mit Moldfix"

## Beschreibung

Die Erfindung betrifft eine Schnellwechsel- und -spannvorrichtung für die Formwerkzeuge von Spritzgießmaschinen entsprechend dem Oberbegriff des Patentanspruchs 1.

Eine Schnellwechsel- und -spannvorrichtung mit dieser Merkmalsausstattung ist durch eine in der Druckschrift "Baktenfeld-Symposium mit Sonderschau 04. bis 0.7. 05. 1982" offenbarte Bauart bereits bekannt. Sie hat den Vorteil, daß der Wechsel des Formwerkzeuges von der Seite her in horizontaler Richtung stattfinden kann. Hierdurch wird ein problemlos exaktes Aus- und Einfahren der Formwerkzeuge im Wechselbereich der Spritzgießmaschine ermöglicht. Es gelangt also ein Transportsystem zum Einsatz, bei welchem das Formwerkzeug ohne Änderung seiner eigenen Richtungslage zunächst quer zur Trennebene seiner Formhälften vor die Schließeinheit seiner Spritzgießmaschine gebracht und dann parallel zu dieser Trennebene auf die Einschubführungen an den Formaufspannplatten dieser Schließeinheit gestellt werden kann. Umgekehrt muß ein in der Schließeinheit befindliches Formwerkzeug entgegengesetzt zu seiner vorherigen Einschubrichtung, aber parallel zur Trennebene der Formhälften aus der Schließeinheit herausgezogen sowie daran anschließend quer zur Trennebene auf der Transportvorrichtung aus dem Bereich der Schließeinheit bewegt werden.

Durch den Einsatz ein und desselben Transportsystems sowohl zum Einbringen eines Formwerkzeuges in die Schließeinheit der Spritzgießeinheit als auch zum Herausziehen eines anderen Formwerkzeuges aus deren Schließeinheit ist aber ein mit der bekannten Schnellwechsel- und -spannvorrichtung vorzunehmender Formwerkzeug-Austausch im Bereich der Schließeinheit der Spritzgießmaschine noch verhältnismäßig umständlich und zeitaufwendig.

Zur Vermeidung dieser Mängel der bekannten Schnellwechsel- und - spannvorrichtung ist der Erfindung das Ziel gesetzt, eine Schnellwechsel- und -spannvorrichtung der gattungsgemäßen Art für eine Optimierung des Werkzeugwechsels auszubauen.

Zur Lösung dieser Aufgabe werden die Merkmale des Kennzeichens des Patentanspruchs 1 vorgeschlagen.

Der wesentliche Vorteil einer mit diesen Merkmalen ausgestatteten Schnellwechsel- und -spannvorrichtung liegt darin, daß das dem Formwerkzeugwechsel dienende Transportsystem eine optimale Einsteuerung des Transportwagens relativ zur Schließeinheit der Spritzgießmaschine sowohl für das Herausziehen des einen Formwerkzeuges aus dieser Schließeinheit als auch für das Einfahren eines anderen Formwerkzeuges in diese Schließeinheit sicherstellen kann, um damit im programmierbaren Ablauf einen schnellen und problemlosen Werkzeugwechsel an Spritzgießmaschinen vorzunehmen und folglich deren Stillstandszeiten beträchtlich zu verkürzen.

Durch die JP-A-55 67 428 und die Abhandlung "Mould changing in minutes" aus "European Plastics News, March 1982" sind zwar jeweils schon Vorrichtungen bekanntgeworden, die es möglich machen, zwei verschiedene Quertransporte in den Bereich der Schließeinheit einer Spritzgießmaschine zu bringen, damit der eine Quertransport ein aus der Schließeinheit auszufahrendes Formwerkzeug aufnehmen kann, während von dem anderen Quertransport aus sich ein anderes Formwerkzeug anschließend in die Schließeinheit einfahren läßt. Jeder der Quertransporte ist dabei mit einer Rollbahn versehen, welche das jeweilige Formwerkzeug unterstützt und seine Bewegung relativ zur Schließeinheit ermöglicht.

Abgesehen davon, daß diese bekannten Vorrichtungen, zum Ein- und Ausfahren der Formwerkzeuge an Spritzgießmaschinen nicht der eingangs spezifizierten Gattung angehören, weil die beiden Formaufspannplatten der Schließeinheit keine leistenförmigen Einschubführungen für die Formwerkzeuge aufweisen, können dort auch die Formwerkzeuge mit Hilfe der Quertransporte nicht unmittelbar auf die und von den leistenförmigen Einschubführungen der ortsfesten Formaufspannplatte bewegt werden. Der bzw. die Transportwagen haben auch keinen Fahrantrieb, der über Endschalter steuerbar und mittels dessen jeder Quertransport zumindest auf die leistenförmigen Einschubführungen der ortsfesten Formaufspannplatten ausrichtbar ist.

In weiterer Ausgestaltung der Erfindung kann der Fahrantrieb als elektro-hydraulischer Kraftantrieb ausgelegt werden, der sich problemlos hinsichtlich seiner Fahrgeschwindigkeit regulieren läßt, folglich eine optimale Einsteuerung des Transportwagens durch die Endschalter ermöglicht.

Bewährt hat es sich auch, die Führungsorgane des Transportwagens aus die Leitschiene umgreifenden Rollensätzen bestehen zu lassen. Ferner kann jeder Rollenbahn ein mit den Formwerkzeugen kuppel- und entkuppelbarer Verschiebeantrieb zugeordnet werden.

Als besonders vorteilhaft hat es sich erwiesen, wenn die der einen Rollenreihe jeder Rollenbahn zugeordneten Leitorgane jeweils aus zwei sich oberhalb der Transportebene der Rollenbahn mit Abstand gegenüberliegenden Backen oder Schienen bestehen, zwischen die die an den Formwerkzeugen vorgesehenen Führungsleisten eingreifen. Bewährt hat es sich auch, wenn die mit den Leitorganen ausgestattete Rollenreihe eine wesentlich geringere Baubreite aufweist, als die andere Rollenreihe, weil sie nämlich unabhängig von den jeweiligen baulichen Abmessungen des Formwerkzeuges immer nur den mit den Führungsleisten versehenen Werkzeugteil zu tragen hat, während im übrigen das Werkzeug von der breiteren Rollenreihe getragen wird.

Bei einer bevorzugten Ausführungsform ist weiterhin vorgesehen, daß ein Mitnehmer- und/oder Kupplungsholm des Verschiebeantriebs durch den Abstandsbereich zwischen den beiden Rollenreihen über die Transportebene der Rollenbahn hochragt. Hierdurch kann nämlich das aus- und einfahrende Formwerkzeug oberhalb der Transportebene des Quertransportes sicher vom Verschiebeantrieb erfaßt werden. Ein anderes wichtiges Ausgestaltungsmerkmal der Erfindung besteht darin, daß der oder jeder Quertransport auf einem Stützrahmen ruht, welcher in Höhenrichtung justierbar auf dem Transportwagen angeordnet ist. Auf diese Art und Weise ist es dann leicht möglich, sich ggfs. einstellende Höhenunterschiede zwischen der Transportebene des Quertransportes und den Einschubführungen der Spritzgießmaschine auszugleichen. Wichtig ist aber auch, daß zwischen dem Transportwagen und den Einschubführungen der Spritzgießmaschine noch eine ortsfeste Rollenbahn angeordnet ist und daß die Transportebene dieser ortsfesten Rollenbahn ebenfalls in ihrer Höhenlage zu den Einschubführung justierbar ist.

Schließlich kann eine weitere Ausgestaltung der Schnellwechsel- und -spannvorrichtung auch darin bestehen, daß sich seitlich neben der Spritzgießmaschine und parallel zu deren Rollenbahn angeordnet mindestens eine weitere Rollenbahn befindet, auf die der Transportwagen mit seiner Rollenbahn in einer vom Wechselbereich der Spritzgießmaschine entfernten Fahrstellung ausrichtbar ist. Diese Rollenbahn kann dazu dienen, die Formwerkzeuge, welche aufeinanderfolgend zum Einbau in die und zum Ausbau aus der Spritzgießmaschine vorgesehen sind, bspw. von einem Werkzeugdepot an den Transportwagen heranzuführen oder aber sie vom Transportwagen weg in das Werkzeugdepot zu bewegen.

Bei der erfindungsgemäßen Schnellwechsel- und -spannvorrichtung ist es wichtig, daß sich die jeweils nur einer Rollenreihe jeder Rollenbahn der Quertransporte zugeordneten Leitorgane auf die leistenförmigen Einschubführungen der ortsfesten Formaufspannplatte der Spritzgießmaschine ausrichten lassen, weil hierdurch gewährleistet wird, daß jedes einzufahrende Formwerkzeug unmittelbar und problemlos mit diesen Einschubführungen in Eingriff gelangt.

Weitere Merkmale und Vorteile des Gegenstandes der Erfindung werden nachfolgend anhand einer Zeichnung ausführlich erläutert. Hierbei zeigen:
Figur 1 in Seitenansicht und teilweise im Schnitt eine Spritzgiessmaschine mit einer erfindungsgemässen Schnellwechsel- und -spannvorrichtung für die Formwerkzeuge, die
Figuren 2.1 und 2.2 eine Draufsicht auf die Spritzgiessmaschine sowie die Schnellwechsel- und -Spannvorrichtung nach Fig. 1 in Pfeilrichtung II,
Figur 3 in grösserem Massstab einen Schnitt längs der Linie III-III in der Fig. 1,
Figur 4 ebenfalls in grösserem Massstab eine Ansicht in Pfeilrichtung IV der Fig. 1,
Figur 5 in grösserem Massstab den in Fig. 1 mit V gekennzeichneten Teilbereich und
Figur 6 einen Schnitt entlang der Linie VI-VI in Fig. 5.

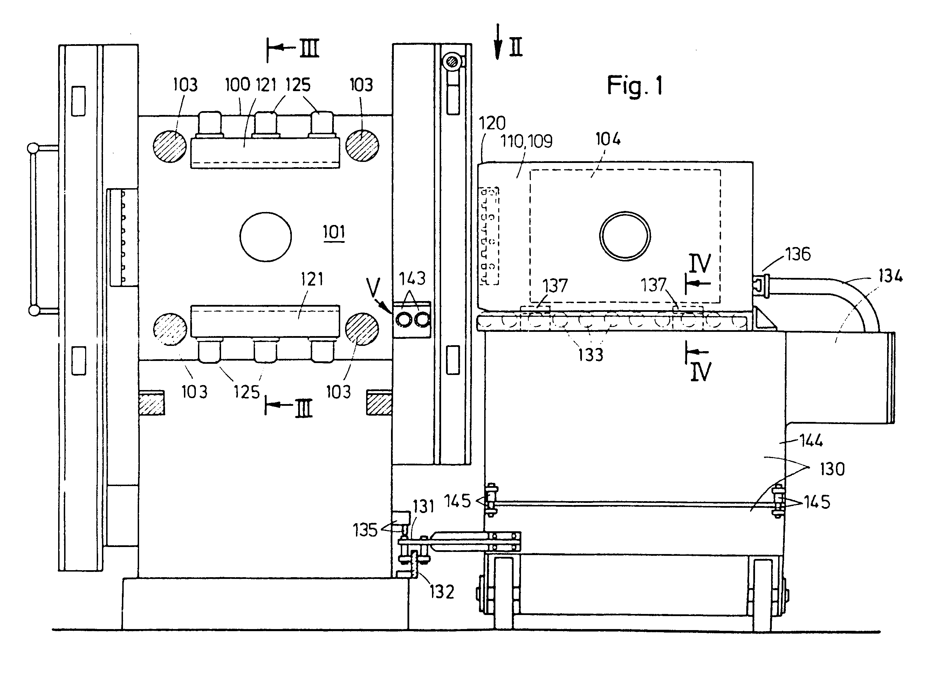

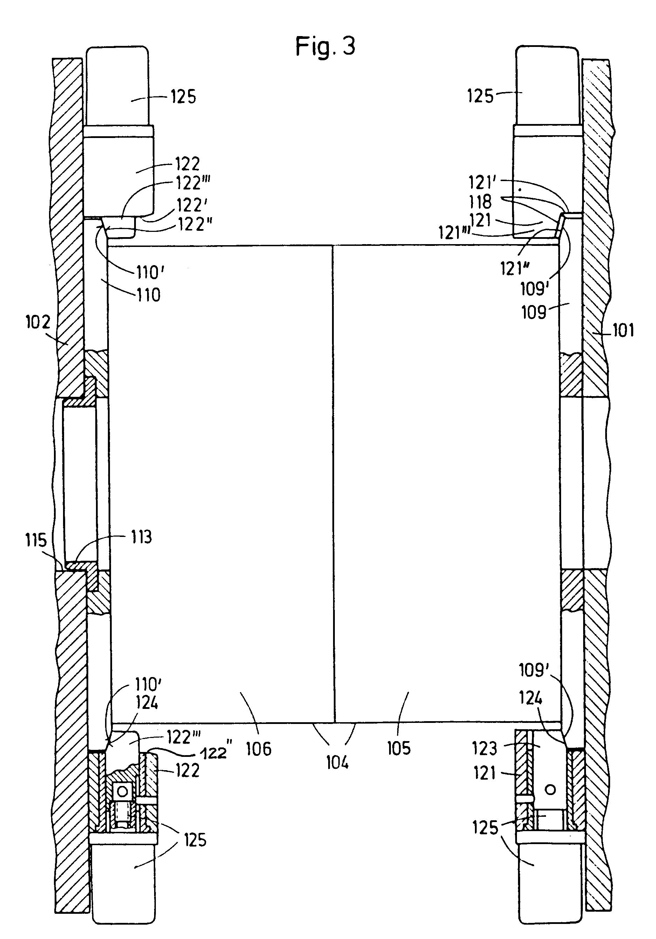

In den Fig. 1 sowie 2.1 und 3 ist eine Spritzgiessmaschine 100 üblicher Bauart rein schematisch angedeutet. Dabei ist zu sehen, dass diese mehrere, bspw. vier, im Querschnitt runde Stangen 103 aufweist, die zur Ausrichtung und relativ verschiebbaren Führung der Formaufspannplatte 102 gegenüber der ortsfesten Formaufspannplatte 101 dienen. Erkennbar ist ferner, und zwar insbesondere aus Fig. 3, dass zwischen die beiden Formaufspannplatten 101 und 102 der Spritzgiessmaschine 100 das eigentliche Formwerkzeug 104 eingesetzt wird, welches im wesentlichen aus den beiden Formhälften 105 und 106 zusammengesetzt ist, zwischen denen die Formkammer gebildet wird.

Der Wechsel des Formwerkzeuges 104 wird an der Spritzgiessmaschine in horizontaler Richtung durchgeführt, wie das ohne weiteres aus Fig. 1 ersichtlich ist.

Die beiden Formhälften 105 und 106 werden für den Werkzeugwechsel aus Sicherheitsgründen in der Schliesslage des Formwerkzeuges 104 durch besondere Kupplungselemente (nicht gezeigt) gegeneinander verriegelt. Nach dem Einbau des Formwerkzeuges 104 zwischen die beiden Formaufspannplatten 101 und 102 werden diese Kupplungselemente gelöst, so dass die beiden Formhätten 105 und 106 wahlweise zum Öffnen des Formwerkzeuges 104 auseinandergefahren oder zum Schliessen desselben wieder zusammengefahren werden können.

Die Formhälfte 105 des Formwerkzeuges 104 sitzt gemäss Fig. 3 auf einer flachen Adapterplatte 109, während die Formhälfte 106 in ähnlicher Weise auf einer flachen Adapterplatte 110 montiert wird. Sämtliche Adapterplatten 109 und 110 haben dabei vorzugsweise übereinstimmende Abmessungen, auch wenn die verschiedenen Formwerkzeuge 104 selbst unterschiedlich bemessen sind.

Der Werkzeugwechsel, d.h. der Aus- und Einbau der Formwerkzeuge 104 zwischen den Formaufspannplatten 101 und 102 erfolgt an der Spritzgiessmaschine 100 in horizontaler Richtung, und zwar in einer quer zur Öffnungs- und Schliessbewegung des Formwerkzeuges 104 verlaufenden Richtung. Er findet unter Zuhilfenahme einer Schnellwechsel- und -spannvorrichtung statt, deren Aufbau und Wirkungsweise nachfolgend noch näher erläutert werden.

Das Formwerkzeug 104 bzw. dessen beide Formhälften 105 und 106 werden über die Adapterplatten 109 und 110 in die Einschubführungen 121 und 122 der Formaufspannplatten 101 und 102 gebracht und darin über Klemmorgane in Form von verschiebbaren Nocken 123 bzw. 122''' festgelegt.

Die Einschubführungen 121 an der Formaufspannplatte 101 werden von zwei spiegelbildlich zueinander an deren Stirnfläche sitzenden Leisten gebildet, die einerseits parallel zur Einschubrichtung der Adapterplatte 109 gerichtete Führungsflächen 121' haben, andererseits aber mit vor die Stirnflächen 109' der Adapterplatte 109 greifenden Stützflächen 121'' versehen sind, wie das deutlich aus Fig. 3 hervorgeht.

Die Stützflächen für die parallel zu ihrer Ebene in die Einschubführungen 121 der Formaufspannplatte 101 einrückbare Adapterplatte 109 werden vorzugsweise durch einstückig an die Leisten 121 angeformte Nasen 121''' gebildet, wobei es sich als zweckmässig erweist, die Stützflächen 121'' und die damit zusammenwirkenden Stirnflächen-Abschnitte 109' der Adapterplatte 109 gegenüber der Stirnfläche der Formaufspannplatte 101 geneigt verlaufen zu lassen.

Damit das Einfahren der Adapterplatte 109 in die Einschubführungen 121 der Formaufspannplatte 101 erleichtert wird, sind am Einlaufende der Einschubführung 121 jeweils geneigte Leitflächen 118 ausgebildet (Fig. 3), die mit zugehörigen Gegenleitflächen 120 am Einschubende der Adapterplatte 109 zusammenwirken können.

Durch die Führungsflächen 121' und die Stützflächen 121'' der von Leisten gebildeten Einschubführungen 121 wird die Adapterplatte 109 und damit das gesamte Formwerkzeug 104 sowohl parallel als auch quer zur Einschubrichtung exakt gegen die stationäre Formaufspannplatte 101 zentriert und ausgerichtet.

Die zur Festlegung der Adapterplatte 109 an der Formaufspannplatte 101 als Klemmorgane benutzten Nocken 123 sind mit Keilflächen 124 versehen, welche mit den geneigten Stirnflächenabschnitten 109' der Adapterplatte 109 in Wirkverbindung treten, wie das aus Fig. 3 ersichtlich ist. Die Nocken 123 mit den Keilen 124 sind verschiebbar in den die Einschubführungen 121 bildenden Leisten angeordnet und werden, vorzugsweise einzeln, über Druckmittelzylinder 125 betätigt, die an der Aussenseite der Leisten sitzen, wie das die Fig. 1 und 3 deutlich erkennen lassen.

Nachdem das gesamte Formwerkzeug 104 über die Adapterplatte 109 der Formhälfte 105 exakt an der ortsfesten Formaufspannplatte 101 fixiert ist, wird die verschiebbare Formaufspannplatte 102 gegen die Adapterplatte 110 der Formhälfte 106 herangefahren. Dabei steht die Adapterplatte 110 über ihre horizontale Längskanten mit horizontalen Führungsflächen 122' der als Leisten ausgebildeten Einschubführungen 122 in Wirkverbindung, welche an der Stirnfläche der Formaufspannplatte 102 montiert sind, wie das aus Fig. 3 hervorgeht.

Bevor die Adapterplatte 110 mit ihrer Rückseite auf die Stirnfläche der Formaufspannplatte 102 trifft, kommt weiterhin noch ein Zentrieransatz 113 derselben mit einer Zentrierausnehmung 115 der Formaufspannplatte 102 in Eingriff, wodurch eine exakte Ausrichtung der Formhälfte 106 an der zugehörigen Formaufspannplatte 102 erreicht wird.

Zur endgültigen Festlegung der Adapterplatte 110 und damit der Formhälfte 106 an der Formaufspannplatte 102 dienen die verschiebbaren Nocken 122''', welche in den die Einschubführungen 122 bildenden Leisten geführt sind und in gleicher Weise Keile 124 bilden, wie die Einschubführungen 121 zugeordneten Nocken 123. Auch die Nocken 122''' werden, vorzugsweise einzeln, über Druckmittelzylinder 125 betätigt, die gemäss Fig. 3 ebenfalls an der Aussenseite der Leisten 122 sitzen.

Über ihre Keilflächen 124 wirken sie dabei mit entsprechend geneigt verlaufenden Keilflächen 110' der Adapterplatte 110 zusammen und bilden auf diese Art und Weise wirksame Klemmorgane zur sicheren Festlegung der Adapterplatte 110 an der Formaufspannplatte 102.

Es ist ohne weiteres erkennbar, dass die Schnellspannvorrichtung nach Fig. 3 bei baulich einfacher Ausgestaltung nur einen geringen Einbauraum benötigt und sich daher auch zur Benutzung in Verbindung mit Formwerkzeugen 104 eignet, die nur eine geringe Bauhöhe aufweisen.

Besonders wesentlich ist, dass der Aus- und Einbau der zu wechselnden Formwerkzeuge 104 mittels einer Schnellwechselvorrichtung vorgenommen wird. Diese Schnellwechselvorrichtung weist einen Transportwagen 130 auf, mit dessen Hilfe die Formwerkzeuge 104 in den oder aus dem eigentlichen Wechselbereich der Spritzgiessmaschine bewegt werden können. Der Wagen 130 wird dabei mit Hilfe von Führungsorganen 131 längs einer ortsfesten Leitschiene 132 bewegt, die der Spritzgiessmaschine 100 so zugeordnet ist, dass sie den Transportwagen 130 exakt im rechten Winkel relativ zu den Einschubführungen 121 und 122 der Formaufspannplatten 101 und 102 der Spritzgiessmaschine 100 verfahrbar führt. Der Transportwagen 130 läuft dabei auf einer ebenen Fahrbahn und weist einen Fahrantrieb auf, der vorzugsweise als elektrohydraulischer Kraftantrieb ausgelegt und damit hinsichtlich der Fahrgeschwindigkeit stufenlos regelbar ist. Die Fahrbewegung des Transportwagens 130 relativ zur Spritzgiessmaschine 100 wird dabei über Endschalter 135 eingesteuert, die in geeigneter Weise entlang der Leitschiene 132 angeordnet sind und bspw. mit den Führungsorganen 131 des Transportwagens 130 als Betätigungselementen zusammenwirken. Nach Fig. 1 sind die Führungsorgane 131 des Transportwagens 130 durch ein Rollenpaar gebildet, welches die Leitschiene 132 von oben her zangenartig umgreift.

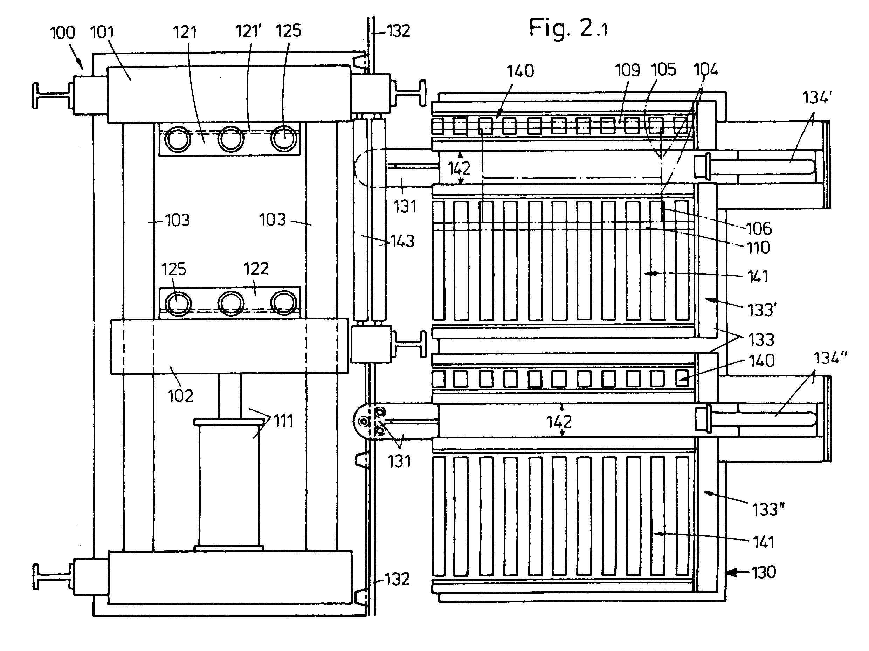

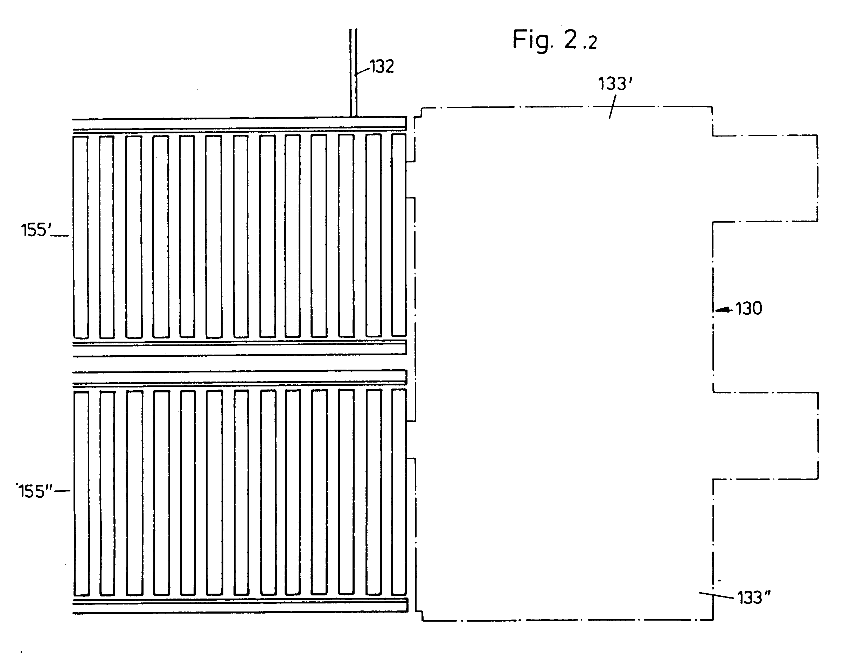

In Fig. 2.1 ist gezeigt, dass die Führungsorgane 131 aber auch durch drei Rollen gebildet werden können, wobei zwei dieser Rollen an der einen Seite (Aussenseite) der Leitschiene 132 und die dritte Rolle an der anderen Seite (Innenseite) der Leitschiene 132 angeordnet ist.

Auf dem Transportwagen 130 sind nebeneinander zwei identisch aufgebaute Quertransporte 133' und 133'' angeordnet, wie das aus Figur 2.1 ersichtlich ist. Die beiden Quertransporte 133' und 133'' werden dabei vorzugsweise durch horizontale Rollenbahnen gebildet.

Der Fig. 1 ist zu entnehmen, dass ein in die Spritzgiessmaschine 100 einzubauendes Formwerkzeug 104 bspw. mittels der unteren Längskanten seiner Adapterplatten 110 und 109 auf der Rollenbahn 133 ruht. Mit dem Formwerkzeug 104 lässt sich dabei eine ebenfalls auf dem Transportwagen 130 angeordnete kraftangetriebene Verschiebevorrichtung 134, bspw. mit Hilfe einer zangenartig wirkenden Klemmschiene 136 kuppeln, welche es ermöglicht, das Formwerkzeug 104 horizontal über den Quertransport 133 in die Spritzgiessmaschine 100 hinein und aus dieser herauszubewegen.

Der Transportwagen 130 ist gemäss Fig. 2.1 gleichzeitig mit zwei identischen, nebeneinander angeordneten Quertransporten 133' und 133'' sowie zugehörigen Verschiebevorrichtungen 134' und 134'' versehen, damit er in der Lage ist, in einem Arbeitszyklus nicht nur ein in die Spritzgiessmaschine einzubauendes Formwerkzeug 104, sondern auch noch ein aus dieser auszubauendes Formwerkzeug 104 aufzunehmen.

Nach Fig. 2.1 ist der erste Einbau eines Formwerkzeuges 104 in die Spritzgiessmaschine 100 vorgesehen, d.h. ein aus der Spritzgiessmaschine 100 auszubauendes Formwerkzeug 104 ist dort der Einfachheit halber nicht gezeigt.

Für das Einfahren des Formwerkzeuges 104 in die Spritzgiessmaschine 100 wird der das Formwerkzeug 104 heranführende, kraftangetriebene Transportwagen 130, wie bereits erwähnt, über die Endschalter 135 relativ zur Spritzgiessmaschine 100 exakt eingesteuert. Dabei ist es wichtig, dass das einzufahrende Formwerkzeug 104 mit seiner Adapterplatte 109 genau auf die Einschubführungen 121 an der ortsfesten Formaufspannplatte 101 ausgerichtet wird, wie das in Fig. 2.1 angedeutet ist.

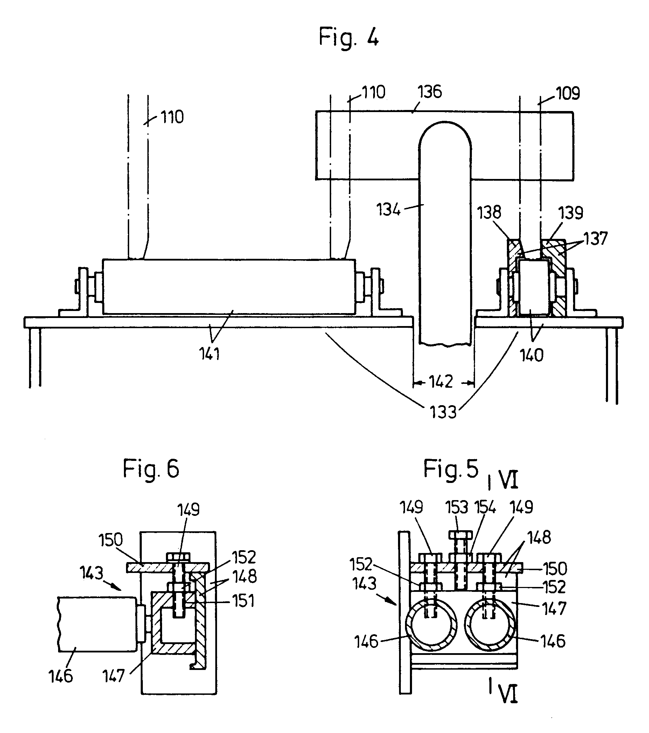

Um diese exakte Ausrichtung des einzufahrenden Formwerkzeuges 104 sicherzustellen, sind der Rollenbahn jedes Quertransportes 133' und 133'' in Transportrichtung verlaufende Leitorgane 137 zugeordnet, die gemäss Fig. 4 jeweils aus zwei sich oberhalb der Transportebene der Rollenbahn mit Abstand gegenüberliegenden Backen oder Schienen 138 und 139 bestehen, zwischen die die Adapterplatte 109 mit ihren unteren Längskanten eingreift.

Jede Rollenbahn der beiden Quertransporte 133' und 133'' wird von zwei in seitlichem Abstand und parallel nebeneinander angeordneten Rollenreihen 140 und 141 gebildet. Die mit den Leitorganen 137 bzw. 138, 139 ausgestattete Rollenreihe 140 weist dabei, wie besonders deutlich aus Fig. 4 hervorgeht, eine wesentlich geringere Baubreite auf als die andere Rollenreihe 141. Die Rollenreihe 140 ist so schmal bemessen, dass sie im Zusammenwirken mit den Leitorganen 137 bzw. 138, 139 gerade die untere Längskante der Adapterplatte 109 tragen kann.

Die Baubreite der zweiten Rollenreihe 141 ist hingegen so ausgelegt, dass sie die untere Längskante der zweiten Adapterplatte 110 des Formwerkzeuges 104 in jedem Falle unterstützen kann, gleichgültig, ob das Formwerkzeug 104 die kleinstmögliche oder aber die grösstmögliche Baubreite aufweist (Fig. 4). Zwischen den beiden Rollenreihen 140 und 141 jedes als Rollenbahn ausgeführten Quertransportes 133' und 133'' ist ein Längsspalt 142 aufrechterhalten, durch den ein Kragarm der Verschiebevorrichtung 134' bzw. 134'' über die Transportebene des Quertransportes hochragt und dort die Kupplungsschiene 136 für das Formwerkzeug 104 trägt.

Wird die Verschiebevorrichtung 134' betätigt, dann wird das auf der Rollenbahn des Quertransportes 133' abgestützte Formwerkzeug 104 horizontal in die Spritzgiessmaschine 100 eingefahren. Dabei gelangt das Formwerkzeug 104 zunächst mit den unteren Längskanten seiner Adapterplatten 109 und 110 auf die in die Spritzgiessmaschine 100 integrierte, also ortsfeste Rollenbahn 143, die den Abstand zwischen der Rollenbahn 133' des Transportwagens 130 und dem Einbaubereich zwischen den beiden Formaufspannplatten 101 und 102 überbrückt. Beim weiteren Vorfahren des Formwerkzeuges 104 mittels der Verschiebevorrichtung 134 läuft dessen Adapterplatte 109 in die Einschubführungen 121 der ortsfesten Formaufspannplatte 101, wobei zugleich eine Ausrichtung stattfindet. Anschliessend werden durch Betätigung der Druckmittelzylinder 125 die als verschiebbare Nocken 123 ausgebildeten Klemmorgane betätigt, die über ihre Keile 124 und die zugeordneten Keilflächen 109' die Adapterplatte 109 gegen die Formaufspannplatte 101 festlegen.

Anschliessend wird die verschiebbare Formaufspannplatte 102 gegen das Formwerkzeug 104 herangefahren, und dieses wird in der bereits weiter vorne beschriebenen Art und Weise in der beweglichen Formaufspannplatte 102 zentriert und an dieser festgespannt.

Der zweite Quertransport 133'' des Transportwagens 130 ist vorgesehen, damit ein bereits in der Spritzgiessmaschine 100 vorgesehenes Spritzwerkzeug 104 zunächst aus dieser ausgefahren werden kann, bevor ein neues, auf dem Quertransport 133' vorgesehenes Formwerkzeug 104 wieder in diese eingefahren wird. Da Aufbau und Wirkungsweise beider Quertransporte 133' und 133'' identisch ist, kann jeder derselben entweder das auszubauende oder aber das einzubauende Spritzwerkzeug 104 aufnehmen.

Für eine dauerhafte einwandfreie Arbeitsweise der Schnellwechselvorrichtung ist es wichtig, dass die beiden Quertransporte 133' und 133'' immer exakt auf die Einfahrebene der Einschubführungen 121, 122 ausgerichtet werden können. Deshalb sitzen die Quertransporte 133' und 133'' auch auf einem Rahmen 144, der über Justierorgane 145, bspw. selbstsperrende Stellspindeln, auf dem Wagen 130 stufenlos justierbar abgestützt ist. Fahrbahnunebenheiten für den Transportwagen 130 im Wechselbereich der Spritzgiessmaschine 100 und/oder gegebenenfalls vorkommende Fundamentsenkungen der Spritzgiessmaschine 100 können auf diese Art und Weise leicht und sicher eliminiert werden.

Auch die der Spritzgiessmaschine 100 ortsfest zugeordnete Rollenbahn 143 muss für eine dauerhart einwandfreie Arbeitsweise der Schnellwechselvorrichtung jederzeit genau auf die Aus- und Einfahrebene für die Spritzwerkzeuge 104 einstellbar vorgesehen sein, d.h. die Transportebene dieser Rollenbahn 143 muss sich möglichst genau auf die Stützflächen der unteren Einschubführungen 121 und 122 an den Formaufspannplatten 101 und 102 der Spritzgiessmaschine 100 einrichten lassen.

Wie aus den Fig. 5 und 6 ersichtlich ist, sind zu diesem Zweck die Rollen 146 der Rollenbahn 143 gemeinsam in Gleitstücken 147 gelagert, die in Lagerböcken 148 sitzen sowie darin jeweils über zwei Justierspindeln 149 aufgehängt sind.

Die Justierspindeln 149 sind dabei beispielsweise durch Schrauben gebildet, die sich mit ihrem Mehrkantkopf auf einer Platte 150 des Lagerbockes 148 abstützen sowie in Gewinde 151 der Gleitstücke 147 eingreifen. Durch Kontermuttern 152 lässt sich die Einstellung der Stellspindeln 149 gegenüber den Gleitstücken 147 jeweils fixieren, und durch eine ebenfalls von einer Kopfschraube gebildete Druckspindel 153, die gleichfalls in der Platte 150 des Lagerbockes 148 sitzt, werden die Gleitstücke 147 in den Lagerböcken 148 festgespannt. Auch die Druckspindel 153 arbeitet mit einer Kontermutter 154 zusammen, damit eine sichere Fixierung jeder Einstellung möglich ist.

In Fig. 2.2 ist angedeutet, dass seitlich von der Spritzgiessmaschine 100 und in mehr oder minder grossem Abstand von dieser zwei stationäre Rollenbahnen 155' und 155'' als Transportvorrichtungen für die Spritzwerkzeuge 104 vorgesehen werden können. Dabei können diese Transportvorrichtungen 155' und 155'' mit zueinander entgegengesetzten Transportrichtungen betrieben werden, und zwar beispielsweise derart, dass die Transportvorrichtung 155' als Zuführtransport und die Transportvorrichtung 155'' als Abführtransport für die Spritzwerkzeuge 104 dient. Die Kopfenden der beiden Transportvorrichtungen 155' und 155'' sind so nebeneinander angeordnet, dass mit ihnen die auf den Transportwagen 130 befindlichen Quertransporte 133' und 133'' durch entsprechende Fahrbewegung des Transportwagens 130 in Fluchtlage gebracht werden können.

Um das zu ermöglichen, kann die Leitschiene 132 von der Spritzgiessmaschine 100 aus durchgehend bis in den Bereich der Transportvorrichtungen 155' und 155'' geführt werden, wie das in Fig. 2.2 angedeutet ist. Eine solche Anordnung ist zumindest dann zu empfehlen, wenn die Transportvorrichtungen 155' und 155'' keinen all zu grossen Abstand von der Spritzgiessmaschine 100 haben. Befinden sich jedoch die Kopfenden der beiden Transportvorrichtungen 155' und 155'' mit beträchtlichem Abstand von der Spritzgiessmaschine 100, dann empfiehlt es sich, den Transportwagen 130 mit einem lenkbaren Fahrwerk auszustatten und seine Fahrbewegung über eine induktive Steuerung mittels einer im Boden verlegten Induktionsschiene zu beeinflussen. Im Bereich der Spritzgiessmaschine 100 wird jedoch der Transportwagen 130 selbsttätig über die Induktionssteuerung so an die Leitschiene 132 herangeführt, dass seine Führungsorgane 131 mit dieser in Eingriff kommen und dann die exakte Bewegungssteuerung gewährleisten.

Mit Hilfe einer vorstehend beschriebenen Schnellwechselvorrichtung ist es möglich, im programmierbarem Ablauf einen schnellen und problemlosen Werkzeugwechsel an Spritzgiessmaschinen vorzunehmen und dadurch deren Stillstandszeiten beträchtlich zu verkürzen.

## Patentansprüche

1. Schnellwechsel- und -spannvorrichtung für die Formwerkzeuge (104) von Spritzgießmaschinen (100),
- wobei die beiden Formhälften (105, 106) jedes Formwerkzeuges (104) auf flachen Adapterplatten (109, 110) montiert sind und zwischen zwei sich gegenüberliegenden Formaufspannplatten (101, 102) der Spritzgießmaschine (100), nämlich einer ortsfesten Formaufspannplatte (101) und einer horizontal verschiebbaren Formaufspannplatte (102) ausrichtbar und in ihrer Ausrichtlage über Klemmorgane (122''', 123) festspannbar sind,
- wobei die verschiebbare Formaufspannplatte (102) zum Schließen des Formwerkzeuges (104) horizontal auf die ortsfeste Formaufspannplatte (101) zu und zum Öffnen desselben horizontal von der ortsfesten Formaufspannplatte (101) weg bewegbar ist,
- wobei an beiden Formaufspannplatten (101, 102) im wesentlichen horizontal und normal zur horizontalen Verstellrichtung der verschiebbaren Formaufspannplatte (102) verlaufende leistenförmige Einschubführungen (121, 122) für die Formwerkzeuge (104) vorgesehen sind,
- wobei der Spritzgießmaschine (100) ein mittels Führungsorganen (131) längs ortsfester Leitschienen (132) quer zu den Einschubführungen (121, 122) bewegbarer Transportwagen (130) für die Formwerkzeuge (104) zugeordnet ist, der wiederum einen aus einer Rollenbahn bestehenden, sich in Richtung der leistenförmigen Einschubführungen (121, 122) erstreckenden Quertransport (133) trägt, mit dem die Formwerkzeuge (104) in den Bereich zwischen die beiden Formaufspannplatten (101, 102) und aus diesem heraus bewegbar sind,
- wobei beide Formhälften (105, 106) des Formwerkzeuges (104) für den Werkzeugwechsel in der Schließlage durch besondere Kupplungselemente gegeneinander verriegelbar sind,
- und wobei die verschiebbare Formaufspannplatte (102) gegen das Formwerkzeug (104) heranfahrbar sowie dabei über ihre leistenförmigen Einschubführungen (122) mit der Adapterplatte (110) der zweiten Formhälfte (106) über die Klemmorgane (122''') kuppelbar ist, bevor die Kupplungselemente zwischen beiden Formhälften (105, 106) zum Öffnen und Schließen des Formwerkzeuges (104) gelöst werden,
dadurch gekennzeichnet,
- daß der Transportwagen (130) zwei Quertransporte (133', 133'') trägt,
- daß jeder Quertransport (133', 133'') aus einer Rollenbahn besteht, die zwei in seitlichem Abstand und parallel nebeneinander angeordnete Rollenreihen (140, 141) aufweist,
- daß die Formwerkzeuge (104) mittels des einen Quertransportes (133' oder 133'') auf die leistenförmigen Einschubführungen (121) der ortsfesten Formaufspannplatte (101) und mittels des anderen Quertransportes (133'' oder 133') von den leistenförmigen Einschubführungen (121) der ortsfesten Formaufspannplatte (101) bewegbar sind,
- daß der Transportwagen (130) einen Fahrantrieb aufweist, der über Endschalter (135) steuerbar und mittels dessen jeder Quertransport (133, 133', 133'') auf die leistenförmigen Einschubführungen (121) der ortsfesten Formaufspannplatte (101) der Spritzgießmaschine (100) ausrichtbar ist,
- daß die Rollenbahn jedes Quertransportes (133, 133', 133'') mit ihrer Transportebene auf die Einlaufebene der leistenförmigen Einschubführungen (121, 122) einstellbar ist,
- daß eine Rollenreihe (140) der beiden Rollenreihen (140, 141) jedes Quertransportes (133; 133', 133'') in Transportrichtung verlaufende Leitorgane (137) für eine an der Adapterplatte (109) der der ortsfesten Formaufspannplatte (101) zugeordneten Formhälfte (105) ausgebildete Führungsleiste aufweist,
- und daß die Leitorgane (137) für die Führungsleiste der Adapterplatte (109) der einen Formhälfte (105) genau auf die leistenförmigen Einschubführungen (121) an der ortsfesten Formaufspannplatte (101) ausrichtbar sind.

2. Schnellwechsel- und -spannvorrichtung nach Anspruch 1,
**dadurch gekennzeichnet,**
daß der Fahrantrieb als elektrohydraulischer Kraftantrieb ausgelegt ist.

3. Schnellwechsel- und -spannvorrichtung nach Anspruch 1,
**dadurch gekennzeichnet,**
daß die Führungsorgane (131) des Trabsportwagens (130) aus die Leitschiene (132) umgreifenden Rollensätzen bestehen.

4. Schnellwechsel- und -spannvorrichtung nach Anspruch 1,
**dadurch gekennzeichnet,**
daß jeder Rollenbahn (140, 141) ein mit den Formwerkzeugen (104) kuppel- und entkuppelbarer Verschiebeantrieb (134; 134', 134'') zugeordnet ist.

5. Schnellwechsel- und -spannvorrichtung nach Anspruch 1,
**dadurch gekennzeichnet,**
daß die Leitorgane (137) jeweils aus zwei sich oberhalb der Transportebene der Rollenbahn (140, 141) mit Abstand gegenüberliegenden Backen oder Schienen (138, 139) bestehen, zwischen die die an den Formwerkzeugen (104) vorgesehenen Führungsleisten der Adapterplatte (109) eingreifen.

6. Schnellwechsel- und -spannvorrichtung nach Anspruch 1 oder 5,
**dadurch gekennzeichnet,**
daß die mit den Leitorganen (137) ausgestattete Rollenreihe (140) eine wesentlich geringere Baubreite aufweist, als die andere Rollenreihe (141).

7. Schnellwechsel- und -spannvorrichtung nach Anspruch 4,
**dadurch gekennzeichnet,**
daß ein Mitnehmer- und/oder Kupplungsholm des Verschiebeantriebs (134; 134', 134'') durch den Abstandsbereich (142) zwischen den beiden Rollenreihen (140 und 141) über die Transportebene der Rollenbahn (140, 141) hochragt.

8. Schnellwechsel- und -spannvorrichtung nach einem der Ansprüche 1, 4 und 5,
**dadurch gekennzeichnet,**
daß der oder jeder Quertransport (133; 133', 133'') auf einem stützrahmen (144) ruht, welcher in Höhenrichtung justierbar (145) auf dem Transportwagen (130) angeordnet ist.

9. Schnellwechsel- und -spannvorrichtung nach einem der Ansprüche 1 bis 8,
**dadurch gekennzeichnet,**
daß zwischen dem Transportwagen (130) und den Einschubführungen (121, 122) der spritzgießmaschine (100) eine ortsfeste Rollenbahn (143) angeordnet ist, die mit der Transportebene des Quertransportes (133; 133', 133'') auf dem Transportwagen (130) fluchtet.

10. Schnellwechsel- und -spannvorrichtung nach Anspruch 9,
**dadurch gekennzeichnet,**
daß die Transportebene der ortsfesten Rollenbahn (143) in ihrer Höhenlage zu den Einschubführungen (121, 122) der Spritzgießmaschine (100) und zum Quertransport (133; 133', 133'') auf dem Transportwagen (130) justierbar ist (147 bis 154).

11. Schnellwechsel- und -spannvorrichtung nach einem der Ansprüche 1 bis 10,
**dadurch gekennzeichnet,**
daß sich seitlich neben der Spritzgießmaschine (100), parallel zu deren Einschubführungen (121, 122) angeordnet, mindestens eine weitere Rollenbahn (155', 155'') befindet, auf die der Transportwagen (130) mit seinem Quertransport (133; 133', 133'') ausrichtbar ist.

## Claims

1. Quick-change and quick-action clamping device for the mould tools (104) of injection moulding machines (100),
- wherein the two mould halves (105, 106) of each mould tool (104) are mounted on flat adapter plates (109, 110) and are orientable between two mutually opposite mould clamping plates (101, 102) of the injection moulding machine (100), namely a stationary mould clamping plate (101) and a horizontally displaceable mould clamping plate (102), and are firmly clampable in their oriented position by way of clamping organs (122''', 123),
- wherein the displaceable mould clamping plate (102) is movable horizontally towards the stationary mould clamping plate (101) for closing of the mould tool (104) and horizontally away from the stationary mould clamping plate (101) for opening of the tool,
- wherein strip-shaped insertion guides (121, 122), which extend substantially horizontally and normal to the horizontal displacement direction of the displaceable mould clamping plate (102), for the mould tools (104) are provided at both mould clamping plates (101, 102),
- wherein associated with the injection moulding machine (100) is a transport carriage (130) for the mould tools (104), which carriage is movable by means of guide organs (131) along fixedly located guide rails (132) transversely to the insertion guides (121, 122) and in turn carries a transverse transport device (133), which consists of a roller track, extends in the direction of the strip-shaped insertion guides (121, 122) and by which the mould tools (104) are movable into and out of the region between the two mould clamping plates (101, 102),
- wherein for the tool change both mould halves (105, 106) of the mould tool (104) are lockable relative to one another in the closed position by separate coupling elements,
- and wherein the displaceable mould clamping plate (102) is drivable up towards the mould tool (104) as well as in that case couplable by way of its strip-shaped insertion guides (122) with the adapter plate (110) of the second mould half (106) by the clamping organs (122''') before the coupling elements between the two mould halves (105, 106) of the opening and closing of the mould tool (104) are released,
characterised thereby
- that the transport carriage (130) carries two transverse transport devices (133', 133''),
- that each transverse transport device (133', 133'') consists of a roller track which comprises two roller rows (140, 141) arranged at a lateral spacing and parallelly one beside the other,
- that the mould tools (104) are movable by means of the one transverse transport device (133' or 133'') to the strip-shaped insertion guides (121) of the stationary mould clamping plate (101) and by means of the other transverse transport device (133'' or 133') from the strip-shaped insertion guides (12) of the stationary mould clamping plate (101),
- that the transport carriage (130) has a travel drive, which is controllable by way of limit switches (135) and is orientable by means of each transverse transport device (133, 133', 133'') thereof to the strip-shaped insertion guides (121) of the stationary mould clamping plate (101) of the injection moulding machine (101),
- that the roller track of each transverse transport device (133, 133', 133'') is settable by its transport plane to the inlet plane of the strip-shaped insertion guides (121, 122),
- that each roller row (140) of the two roller rows (140, 141) of each transverse transport device (133; 133', 133'') comprises guide organs (137), which extend in the transport direction, for a guide strip formed at the adapter plate (109) of the mould half (105) associated with the stationary mould clamping plate (101),
- and that the guide organs (137) for the guide strip of the adapter plate (109) of the one mould half (105) are orientable exactly to the strip-shaped insertion guides (121) at the stationary mould clamping plate (101).

2. Quick-change and quick-action clamping device according to claim 1, characterised thereby, that the travel drive is designed as electro-hydraulic power drive.

3. Quick-change and quick-action clamping device according to claim 1, characterised thereby that the guide organs (131) of the transport carriage (130) consist of sets of rollers engaging around the guide rail (132).

4. Quick-change and quick-action clamping device according to claim 1, characterised thereby, that a displacement drive (134; 134', 134''), which is couplable with and disengageable from the mould tools (104), is associated with each roller track (140, 141).

5. Quick-change and quick-action clamping device according to claim 1, characterised thereby that the guide organs (137) each consists of two cheeks or rails (138, 139), which lie one opposite the other at a spacing above the transport plane of the roller track (140, 141) and between which engage the guide strips (109), which are provided at the moulding tools (104), of the adapter plates.

6. Quick-change and quick-action clamping device according to claim 1 or 5, characterised thereby, that the roller row (140) equipped with the guide organs (137) displays a substantially smaller overall width that the other roller row (141).

7. Quick-change and quick-action clamping device according to claim 4, characterised thereby, that an entraining and/or coupling spar of the displacement drive (134; 134', 134'') projects upwardly beyond the transport plane of the roller track (140, 141) through the spacing region (142) between both the roller rows (140 and 141).

8. Quick-change and quick-action clamping device according to one of claim 1, 4 and 5, characterised thereby, that the or each transverse transport device (133; 133', 133'') rests on a support frame (144), which is arranged on the transport carriage (130) adjustably (145) in vertical direction.

9. Quick-change and quick-action clamping device according to one of the claims 1 to 8, characterised thereby, that a fixedly located roller track (143), which is in alignment with the transport plate of the transverse transport device (133; 133', 133'') on the transport carriage (130), is arranged between the transport carriage (130) and the insertion guides (121, 122) of the injection-moulding machine (100).

10. Quick-change and quick-action clamping device according to claim 9, characterised thereby, that the transport plane of the fixedly located roller track (143) is adjustable in its height position relative to the insertion guides (121, 122) of the injection-moulding machine (100) and to the transverse transport device (133; 133', 133'') on the transport carriage (130).

11. Quick-change and quick-action clamping device according to one of the claims 1 to 10, characterised thereby, that at least one further roller track (155', 155''), with which the transport carriage (130) is alignable by its transverse transport device (133; 133', 133''), is arranged laterally beside the injection-moulding machine (100) and parallelly to the insertion guides (121, 122) thereof.

## Revendications

1. Dispositif de remplacement et de serrage rapides des outils de moulage (104) de machines de moulage sous pression (100), dans lequel :
- les deux moitiés de moule (105, 106) de chaque outil de moulage (104) sont montées sur des plaques d'adaptation planes (109, 110), et peuvent être alignées et fixées dans leur position d'alignement, au moyen d'organes de serrage (122''', 123), entre deux plaques de serrage (101, 102) de la machine de moulage (100), placées l'une en face de l'autre, à savoir une plaque de serrage fixe (101) et une plaque de serrage mobile horizontalement (102), la plaque de serrage mobile (102) peut être rapprochée dans le sens horizontal de la plaque de serrage fixe (101) pour la fermeture de l'outil de moulage (104), et être écartée dans le sens horizontal depuis la plaque de serrage fixe (101) pour son ouverture,
- sur les deux plaques de serrage (101, 102) sont prévus des dispositifs de guidage d'introduction en forme de barrettes (121, 122) pour les outils de moulage (104), qui s'étendent sensiblement horizontalement et normalement à la direction de déplacement horizontal de la plaque de serrage mobile (102),
- à la machine de moulage sous pression (100) est associé un chariot de transport (130) pour les outils de moulage (104) qui peut se déplacer, au moyen d'organes de guidage (131), le long de rails de guidage fixes (132), transversalement par rapport aux dispositifs de guidage d'introduction (121, 122), ce chariot de transport (130) portant à son tour un dispositif de transport transversal (133, 133', 133'') qui s'étend dans la direction des dispositifs de guidage d'introduction en forme de barrettes (121, 122) et qui est constitué par une voie à rouleaux, et au moyen duquel les outils de moulage (104) peuvent être déplacés dans la région entre les deux plaques de serrage (101, 102) et hors de cette région,
- les deux moities de moule (105, 106) de l'outil de moulage (104) peuvent être verrouillées l'une contre l'autre par des éléments d'accouplement particuliers dans la position de fermeture pour l'échange des outils, et
- la plaque de serrage mobile (102) peut être approchée contre l'outil de moulage (104), et être alors accouplée via ses dispositifs de guidage d'introduction en forme de barrettes (122) et au moyen des organes de serrage (122''') à la plaque d'adaptation (110) de la seconde moitié de moule (106), avant que les éléments d'accouplement entre les deux moitiés de moule (105, 106) ne soient libérés pour ouvrir et fermer l'outil de moulage (104),
caractérisé en ce que :
- le chariot de transport (130) porte deux dispositifs de transport transversal (133', 133''),
- chaque dispositif de transport transversal (133', 133'') est constitué d'un train de rouleaux qui comporte deux rangées de rouleaux (140, 141) disposées parallèlement l'une à l'autre et à une certaine distance latérale l'une de l'autre,
- les outils de moulage (104) peuvent être déplacés au moyen de l'un des dispositifs de transport transversal (133' ou 133'') vers les dispositifs de guidage d'introduction en forme de barrettes (121) de la plaque de serrage fixe (101), et au moyen de l'autre dispositif de transport transversal (133'' ou 133') depuis les dispositifs de guidage d'introduction en forme de barrettes (121) de la plaque de serrage fixe (101),
- le chariot de transport (130) comporte un dispositif d'entraînement qui peut être commandé au moyen de commutateurs de fin de course (135) et au moyen duquel chaque dispositif de transport transversal (133, 133', 133'') peut être orienté vers les dispositifs de guidage d'introduction en forme de barrettes (121) de la plaque de serrage fixe (101) de la machine de moulage sous pression (100),
- le plan de transport du train de rouleaux de chaque dispositif de transport transversal (133, 133', 133'') être réglé sur le plan d'entrée des organes de guidage d'introduction en forme de barrettes (121, 122),
- l'une des rangées de rouleaux (140) des deux rangées de rouleaux (140, 141) de chaque dispositif de transport transversal (133, 133', 133'') comporte des organes de guidage (137) orientés dans la direction de transport, pour une barrette de guidage réalisée sur la plaque d'adaptation (109) de la moitié de moule (105) associée à la plaque de serrage fixe (101), et
- les organes de guidage (137) pour la barrette de guidage de la plaque d'adaptation (109) de la moitié de moule (105) peuvent être alignés exactement sur les organes de guidage d'introduction en forme de barrettes (121) sur la plaque de serrage fixe (101).

2. Dispositif de remplacement et de serrage rapides selon la revendication 1, caractérisé en ce que le dispositif d'entraînement est un dispositif à moteur électro-hydraulique.

3. Dispositif de remplacement et de serrage rapides selon la revendication 1, caractérisé en ce que les organes de guidage (131) du chariot de transport (130) sont constitués par des jeux de rouleaux qui entourent les rails de guidage (132).

4. Dispositif de remplacement et de serrage rapides selon la revendication 1, caractérisé en ce qu'à chaque train de rouleaux (140, 141) est associé un dispositif de poussée (134, 134', 134'') qui peut être accouplé et désaccouplé d'avec les outils de moulage (104).

5. Dispositif de remplacement et de serrage rapides selon la revendication 1, caractérisé en ce que les organes de guidage (137) sont constitués chacun par deux mâchoires ou rails (138, 139) qui se trouvent en face l'un de l'autre et à une certaine distance l'un de l'autre au-dessus du plan de transport du train de rouleaux (140, 141) et entre lesquels s'engagent les barrettes de guidage de la plaque d'adaptation (109) prévues sur les outils de formage (104).

6. Dispositif de remplacement et de serrage rapides selon l'une des revendications 1 ou 5, caractérisé en ce que le train de rouleaux (140) équipé des organes de guidage (137) a une largeur nettement moindre que l'autre train de rouleaux (141).

7. Dispositif de remplacement et de serrage rapides selon la revendication 4, caractérisé en ce qu'un longeron d'entraînement et/ou d'accouplement du dispositif de poussée (134, 134', 134'') dépasse, dans l'intervalle (142) compris entre les deux trains de rouleaux (140 et 141), au-dessus du plan de transport du train de rouleaux (140, 141).

8. Dispositif de remplacement et de serrage rapides selon l'une des revendications 1, 4 et 5, caractérisé en ce que le ou chaque dispositif de transport transversal (133, 133', 133'') est supporté par un cadre d'appui (144) qui est monté de manière réglable en hauteur (145) sur le chariot de transport (130).

9. Dispositif de remplacement et de serrage rapides selon l'une des revendications 1 à 8, caractérisé en ce qu'entre le chariot de transport (130) et les dispositifs de guidage d'introduction (121, 122) de la machine à mouler sous pression (100) il comporte un train de rouleaux fixe (143) qui est dans l'alignement du plan de transport du dispositif de transport transversal (133, 133', 133'') sur le chariot de transport.

10. Dispositif de remplacement et de serrage rapides selon la revendication 9, caractérisé en ce que le plan de transport du train de rouleaux fixe (143) est réglable en hauteur (147 à 154) par rapport aux dispositifs de guidage d'introduction (121, 122) de la machine de moulage sous pression (100) et par rapport au dispositif de transport transversal (133, 133', 133'') sur le chariot de transport (130).

11. Dispositif de remplacement et de serrage rapides selon l'une des revendications 1 à 10, caractérisé en ce qu'à côté de la machine de moulage sous pression (100) il comporte au moins un autre train de rouleaux (155', 155'') qui est orienté parallèlement à ses dispositifs de guidage d'introduction (121, 122) et vers lequel le chariot de transport (130) peut être orienté avec son dispositif de transport transversal (133, 133', 133'').
